# NEUE EUROPÄISCHE PATENTSCHRIFT

(11) **EP 0 292 873 B2**
(45) Veröffentlichungstag und Bekanntmachung des Hinweises auf die Entscheidung über den Einspruch: **02.09.1998**
(45) Hinweis auf die Patenterteilung: 16.08.1995
(21) Anmeldenummer: 88108033.7
(22) Anmeldetag: 19.05.1988
(51) Int. Cl.: A01C 17/00

(54) **Ausbring- und Verteilverfahren von Düngemittel**
Method for spreading and distributing fertilizer
Méthode d'épandage et de distribution d'engrais

(30) Priorität: 05.09.1987 DE 3729871; 29.05.1987 DE 3718145; 23.10.1987 DE 3735896; 29.02.1988 DE 3806439
(43) Veröffentlichungstag der Anmeldung: 30.11.1988
(73) Patentinhaber: Amazonen-Werke H. Dreyer GmbH & Co. KG, D-49205 Hasbergen (DE)
(72) Erfinder: Dreyer, Heinz, Dipl.-Ing. Univ. Dr. agr., D-4507 Hasbergen (DE)
(74) Vertreter: Schuster, Thomas, Dipl.-Phys.

(56) Entgegenhaltungen:
- EP-A- 0 017 128
- DE-A- 2 818 227
- DE-U- 8 705 447
- FR-A- 2 450 551
- GB-A- 1 049 352
- US-A- 2 594 084
- Instruktionen für Montage und Einsatz "Zweischeiben-Schleuderdüngerstreuer ROTAST";
- DLG Prüfbericht 3533;
- ACCORD operating instructions "Two discs spreader Discus".

## Beschreibung

Die Erfindung betrifft ein Ausbring- und Verteilverfahren von Düngemitteln in der Landwirtschaft mit Hilfe von Schleuderstreuern.

Durch den Prospekt Amazone ZA-U mit dem Druckvermerk D526 6.87 ist ein Ausbring- und Verteilverfahren von Düngemitteln in der Landwirtschaft mit Hilfe von Schleuderstreuern mit rotierend angetriebenen und mit auswechselbaren Wurfschaufeln ausgestatten Wurfelementen, mittels derer die Düngemittelpartikel über vorbestimmbare Streu- und Arbeitsbreiten abgeschleudert werden, wobei die Streu- und Arbeitsbreite durch die Abstände der beim Aussäen der sich auf der zu bestreuenden Fläche befindenen Pflanzen angelegten Fahrgassen bestimmt wird, wobei die Dünger über die den Fahrgassenabständen entsprechenden Streu- und Arbeitsbreiten verteilt werden, bekannt.

Um bei diesem bekannten Verteilverfahren die Streu- und Arbeitsbreite des Schleuderstreuers den jeweiligen Fahrgassenabständen anpassen zu können, werden die Schleuderscheiben, auf denen Wurfschaufeln befestigt sind, jeweils entsprechend des jeweiligen auszubringenden Düngers und der gewünschten Streu- und Arbeitsbreite eingesetzt, wobei die jeweiligen Wurfschaufeln auf den unterschiedlich bezeichneten Schleuderscheiben unterschiedliche Winkelanstellungen zur Radialen in Schleuderscheibenebene aufweisen.

Nun hat es sich in der Praxis gezeigt, daß der Austausch der Wurfschaufeln durch das Austauschen der verschiedenen Schleuderscheiben gegen andere Schleuderscheiben mit anders ausgebildeten Wurfschaufeln bei den vielfach vorkommenden Düngersorten und Arbeitsbreiten mit den verschieden bezeichneten Schleuderscheiben mit unterschiedlichen Wurfschaufeln und unterschiedlich angestellten Wurfschaufeln nicht ausreichend ist. Eine größere Anzahl verschieden bezeichneter Schleuderscheiben mit verschiedenartig ausgebildeten Wurfschaufeln ist jedoch aufgrund der vom Landwirt verlangten Übersichtlichkeit nicht zu akzeptieren.

Durch den Prospekt Sulky DPX ist ein Ausbring- und Verteilverfahren von Düngemitteln in der Landwirtschaft mit Hilfe von Schleuderstreuern mit rotierend angetriebenen und mit Wurfschaufeln ausgestatteten Wurfelementen, mittels derer die Düngemittelpartikel über vorbestimmbare Streu- und Arbeitsbreiten abgeschleudert werden, wobei die Streu- und Arbeitsbreite durch die Abstände der beim Aussäen der sich auf der zu bestreuenden Fläche befindenen Pflanzen angelegten Fahrgassen bestimmt wird, wobei die Dünger über die den Fahrgassenabständen entsprechenden Streu- und Arbeitsbreiten verteilt werden, bekannt. Die Einstellung des Schleuderstreuers auf die verschiedenen Streu- und Arbeitsbreiten, die den Fahrgassenabständen entsprechen, wird durch die vorgeschriebene Einstellung des Aufgabepunktes des Düngers auf die Wurfelemente gewährleistet. Nicht bei allen Düngersorten und bei allen Arbeitsbreiten wird jedoch eine ausreichend genaue Verteilung des Düngers erreicht.

Sowohl durch den Schleuderstreuer Amazone ZA-U, wie auch durch den Schleuderstreuer Sulky ist es möglich, den Schleuderstreuer auf Arbeitsbreiten von 12 bis 24 m bei einigen wenigen Düngersorten einzustellen. Bekannt ist es jedoch nicht, mit diesen Schleuderstreuern ein Ausbring- und Verteilverfahren von Düngemitteln in der Landwirtschaft mit den von Schleuderstreuern durchzuführen, bei dem Dünger sowohl über die den Fahrgassenabstand entsprechenden Streu- und Arbeitsbreiten wie auch über das Doppelte oder ein ganzes Mehrfaches der Fahrgassenabstände auf demselben Feld verteilt wird, insbesondere, wobei die gleichmäßige Düngerverteilung durch die Einstellung der Wurfschaufeln gewährleistet wird.

Der Erfindung liegt die Aufgabe zugrunde, ein neuartiges Ausbring- und Verteilverfahren von Düngemitteln in der Landwirtschaft zu schaffen, mit welchen wesentlich rationeller und kostengünstiger sowie zeitgünstiger die Düngerausbringung durchzuführen ist

Dieses wird im wesentlichen dadurch erreicht, daß Dünger über den den Fahrgassenabständen entsprechenden Streu- und Arbeitsbreiten oder Dünger über das Doppelte oder ein ganzes Mehrfaches der Fahrgassenabstände auf demselben Feld verteilt wird, wobei die gleichmäßige Düngerverteilung durch die Einstellung der Wurfschaufeln oder die Einstellung des Aufgabepunktes des Düngers auf die Wurfelemente gewährleistet wird. Die Einstellung der Wurfschaufeln in Scheibenebene mit vorgeschiebenen Winkeln zur Radialen ist zu bevorzugen, weil hierdurch eine besonders gute Feineinstellung zur Erreichung der gleichmäßigen Düngerverteilung erreicht wird.

Insbesondere durch die Einstellung der Wurfschaufeln in Scheibenebene mit dem jeweils erforderlichen Winkel zur Radialen läßt sich entsprechend der auszubringenden Düngersorte über die vorgesehene Arbeitsbreite ein bisher nie erreichtes gleichmäßiges Streubild bei sämtlichen auszubringenden Düngersorten über jede in der Praxis geforderte Streu- und Arbeitsbreite erreichen. Durch die Einstellung der Wurfschaufeln mit dem entsprechenden Winkel zur Radialen wird eine äußerst genaue Feineinstellung der Wurfschaufeln auf die Flug- und Abwurfeigenschaften der jeweiligen Düngersorte erreicht. Somit ist es also möglich, mit dem erfindungsgemäßen Ausbring- und Verteilverfahren die wichtigsten Düngersorten, auch die sehr schwer zu streuenden hochstickstoffhaltigen Düngersorten, wie beispielsweise Harnstoff über Arbeitsbreiten von 12 bis 24 m und mehr in bisher nie erreichter gleichmäßiger Weise zu verteilen. Durch die Einstellung der Wurfschaufeln in Scheibenebenene mit dem optimalen Winkel zur Radialen ist es erstmalig möglich, die Wurfschaufeln an das Abwerfverhalten von stumpfen und glatten Düngersorten äußerst genau anzupassen. Mit diesem erfindungsgemäßen Ausbring- und Verteilverfahren von Düngemitteln in der Landwirtschaft wird eine neue Generation von Schleuderstreuern geschaffen, die nicht nur auf Arbeitsbreiten von 9 bis 15 m oder von 15 bis 24 m oder von 9 bis 18 m oder von 12 bis 24 m einzustellen sind, sondern es ist erstmalig möglich geworden, die Schleuderstreuer auf Arbeitsbreiten von weniger als 12 m und auf ein Mehrfaches von 12 m einzustellen. Durch das erfindungsgemäße Verfahren kann der Dünger mit dem Schleuderstreuer also in einfachster Weise auf Arbeitsbreiten von weniger als 12 m und wesentlich mehr als 24 m, bis zu 36 m und mehr eingestellt werden, und so den Dünger in bisher nie erreichter gleichmäßiger Weise bei sämtlichen Arbeitsbreiten und sämtlichen Düngersorten zu verteilen. Es ist also beispielsweise in einfachster Weise möglich geworden, auch das neue Verfahren "Stickstoffdünger auf 12 m und bei weniger Stickstoff bzw. Grunddünger bzw. Spätdüngung die doppelte Arbeits- und Streubreite - also 24 m oder sogar die dreifache Arbeitsbreite - 36 m " zu erreichen. Durch die Einstellung des Schleuderstreuers auf verschiedene Arbeits- und Streubreiten nur durch die unterschiedliche Schaufeleinstellung in Scheibenebene, wobei die Wurfschaufeln mit unterschiedlichen Winkeln zur Radialen in Scheibenebene jeweils entsprechend dem auszubringenden Dünger und dessen Eigenschaften sowie der gewünschten Arbeitsbreite eingestellt werden.

Besonders rationell und gleichmäßig wird das Ausbring- und Verteilverfahren von Düngemitteln in der Landwirtschaft dadurch, daß bei der einen Düngersorte oder Düngungsart jede Fahrgasse befahren wird, wenn der Dünger über die den Fahrgassenabstand entsprechende Breite verteilt wird, und daß bei der anderen Düngersorte oder Düngungsart nur jede zweite oder dritte Fahrgasse befahren wird, wenn der Dünger über das Doppelte oder Mehrfache des Fahrgassenabstandes entsprechenden Arbeits- und Streubreite auf demselben Feld verteilt wird. Hierbei ist dann insbesondere vorgesehen, daß feinkörnige und/oder hochprozentige Stickstoffdünger über die den Fahrgassenabständen entsprechende Streu- und Arbeitsbreite verteilt werden, und daß andere Dünger über die mehrfache, vorzugsweise die doppelte Breite als die Fahrgassenabstände verteilt werden.

Verschiedene Arbeits- und Streubreiten lassen sich nach dem erfindungsgemäßen Verfahren dadurch erzielen, daß zum Erzielen der verschiedenen Arbeitsbreiten, wie einfache und doppelte Arbeitsbreite (Arbeitsbreite = Fahrgassenabstand; Arbeitsbreite = doppelter Fahrgassenabstand) verschiedenartige, vorzugsweise unterschiedlich lange Wurfelemente verwendet werden. Infolge dieser Maßnahmen kann beispielsweise bei windigem Wetter der Dünger mit der einfachen Arbeitsbreite ausgebracht werden, so daß der Windeinfluß relativ gering ist und sich nicht nachteilig auf die Düngerverteilung auswirken kann, wobei dann bei windstillem Wetter der gleiche Dünger über die doppelte oder mehrfache Arbeitsbreite verteilt wird. Dieses ist sehr rationell und wirtschaftlich.

Des weiteren ist erfindungsgemäß vorgesehen, daß dieselben Dünger über den den Fahrgassenabständen entsprechenden oder ein Mehrfaches diesen Abständen entsprechenden Streu- und Arbeitsbreiten verteilt werden, wobei die Gleichmäßigkeit der Verteilung durch die entsprechende Verstellung der Wurfschaufeln in Scheibenebene gewährleistet wird. Infolge dieser Maßnahme wird in äußerst einfacher Weise die Gleichmäßigkeit der Verteilung des Düngers mit unterschiedlichsten Streueigenschaften erreicht.

Weitere Einzelheiten der Erfindung sind der Beispielsbeschreibung und den Zeichnungen zu entnehmen. Hierbei zeigen
- Fig. 1: einen Schleuderdüngerstreuer, der als Anbaudüngerstreuer ausgeführt ist, in der Ansicht von hinten,
- Fig. 2: die linke Schleuderscheibe mit den Wurfschaufeln für das "Normalstreuen" in der Draufsicht und vergrößertem Maßstab,
- Fig. 3: die rechte Schleuderscheibe,

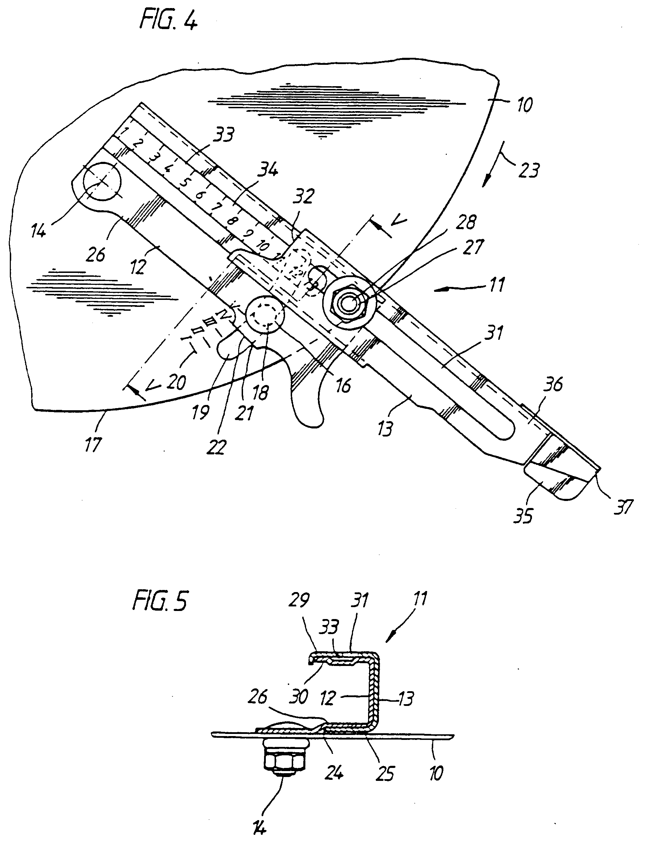

- Fig. 4: Teilansicht der linken Schleuderscheibe mit einer Wurfschaufel für das "Normalstreuen" in der Draufsicht und vergrößertem Maßstab,
- Fig. 5: die Wurfschaufel gemäß Fig. 4 in der Ansicht V - V,

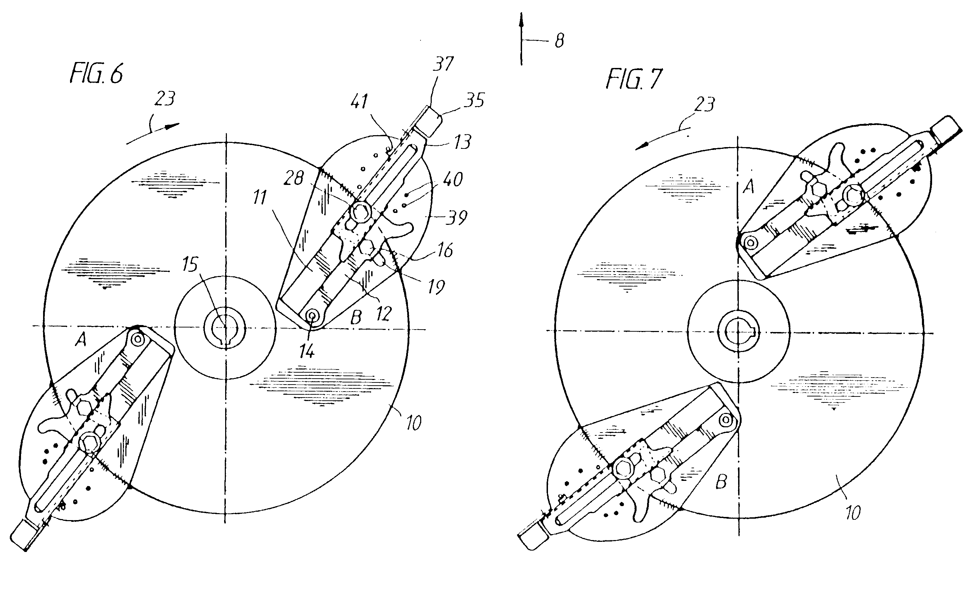

- Fig. 6: eine andere linke Schleuderscheibe mit Wurfschaufeln für das "Normalstreuen",
- Fig. 7: die rechte Schleuderscheibe,
- Fig. 8: die linke Schleuderscheibe mit den Wurfschaufeln für das "Grenzstreuen",
- Fig. 9: die rechte Schleuderscheibe,
- Fig. 10: Teilansicht der linken Schleuderscheibe mit einer Wurfschaufel für das "Grenzstreuen" in der Draufsicht und vergrößertem Maßstab,
- Fig. 11: die Wurfschaufel gemäß Fig. 10 in der Ansicht XI - XI,
- Fig. 12: die Wurfschaufel gemäß Fig. 10 in der Ansicht XII - XII,
- Fig. 13: das Schleuderscheibenpaar für die "größeren" Arbeitsbreiten in der Draufsicht,
- Fig. 14: das Schleuderscheibenpaar für die "kleineren" Streubreiten in der Daufsicht,
- Fig. 15: die linke Grenzstreuscheibe,
- Fig. 16: die rechte Grenzstreuscheibe,
- Fig. 17: die rechte Schleuderscheibe mit winkelverschwenkbaren Wurfschaufeln für das "Normalstreuen" in der Draufsicht,
- Fig. 18: die der einen Wurfschaufel zugeordneten Einstellskala in der Draufsicht und vergrößertem Maßstab,
- Fig. 19: die der anderen Wurfschaufel zugeordnete Einstellskala in der Daufsicht und vergrößertem Maßstab,
- Fig. 20: die rechte Schleuderscheibe mit winkelverschwenkbaren Wurfschaufeln für das "Breitstreuen" in der Draufsicht,
- Fig. 21: die Einstellskala für die eine Wurfschaufel der "Breitstreuscheibe" in Draufsicht und vergrößertem Maßstab,
- Fig. 22: die andere Einstellskala der "Breitstreuscheibe" in der Draufsicht und vergrößertem Maßstab,
- Fig. 23: die rechte Schleuderscheibe mit den Wurfschaufeln für das "Grenzstreuen" in der Draufsicht,
- Fig. 24: die Einstellskala für die eine Wurfschaufel der "Grenzstreuscheibe" in Draufsicht und vergrößertem Maßstab,
- Fig. 25: die andere Einstellskals der "Grenzstreuscheibe" in der Draufsicht und vergrößertem Maßstab,
- Fig. 26: die rechte Schleuderscheibe mit winkelverschwenkbaren und teleskopartig ausgebildeten Wurfschaufeln für das "Normal- und Breitstreuen" in der Draufsicht,

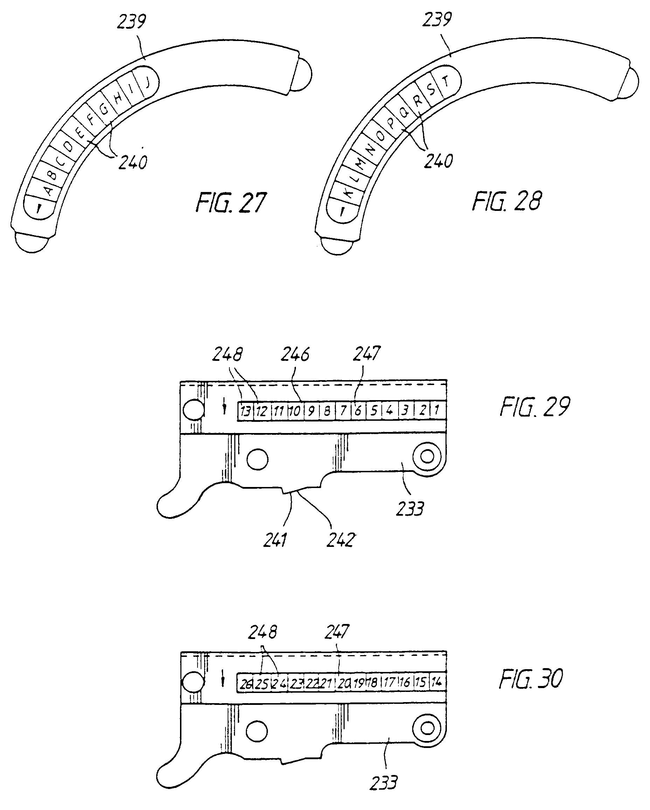

- Fig. 27: eine Einstellskala für die eine Wurfschaufeln der Schleuderscheibe gemäß Fig. 26 in der Draufsicht und vergrößertem Maßstab,
- Fig. 28: die andere Einstellskala für die andere Wurfschaufel der Schleuderscheibe gemäß Fig. 26 in der Draufsicht und vergrößertem Maßstab,
- Fig. 29: der innere Teil der verschwenkbaren, teleskopartig ausgebildeten Wurfschaufel der Schleuderscheibe gemäß Fig 26 mit der Einstellskala in der Draufsicht und vergrößertem Maßstab,
- Fig. 30: der verschwenkbare innere Teil der anderen teleskopartig ausgebildeten Wurfschaufel der Schleuderscheibe gemäß Fig. 26 mit der Einstellskala in der Draufsicht und vergrößertem Maßstab,
- Fig. 31: die rechte Schleuderscheibe mit winkelverschwenkbaren und teleskopartig ausgebildeten Wurfschaufeln für das "Grenzstreuen" in der Draufsicht,

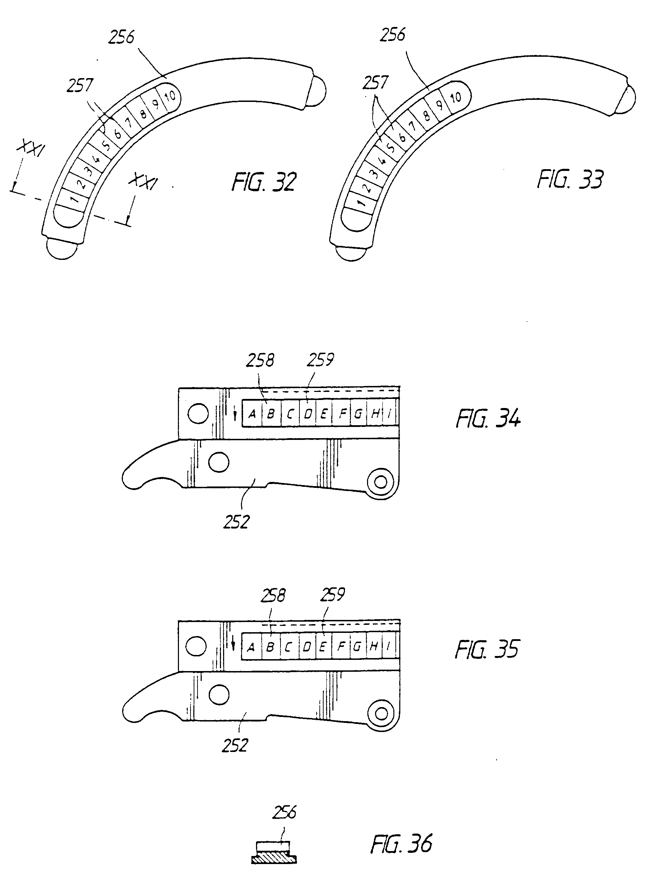

- Fig. 32: die Einstellskala der einen Wurfschaufel der "Grenzstreuscheibe mit den teleskopartig ausgebildeten Wurfschaufeln gemäß Fig. 31,
- Fig. 33: die Einstellskala der "Grenzstreuscheibe" gemäß Fig. 31,
- Fig. 34: das innere Teil der verschwenkbaren, teleskopartig ausgebildeten Wurfschaufel für das "Grenzstreuen" mit der Einstellskala in der Draufsicht und vergrößertem Maßstab,
- Fig. 35: das andere innere, verschwenkbare Teil der teleskopartig ausgebildeten Wurfschaufel der "Grenzstreuscheibe" gemäß Fig. 31 mit der Ein- stellskala in der Draufsicht und vergrößertem Maßstab und
- Fig. 36: die Einstellskala gemäß Fig. 32 in der Ansicht XXI - XXI.

Der Schleuderdüngerstreuer 1 ist mit dem Rahmen 2 ausgestattet an dem der Vorratsbehälter 3 und ein Winkelgetriebe 4 angebracht sind. Hierbei ist der untere Bereich des Vorratsbehälters 3 durch ein dachförmiges Mittelteil 5 in zwei Auslauftrichter 6 unterteilt, in deren Bodenplatten 7 sich nicht näher dargestellte, bekannte Auslauföffnungen befinden. Diese Auslauföffnungen sind mit Hilfe von schieberförmigen Dosierelementen für sich verschließbar und in unterschiedlichen Öffnungsweiten einstellbar.

Unterhalb der Auslauföffnungen sind quer zur Fahrtrichtung 8 auf den Ausgangswellen 9 des Winkelgetriebes 4 die Schleuderscheiben 10 nebeneinander angeordnet. Auf diesen Schleuderscheiben 10 sind jeweils zwei Wurfschaufeln 11 befestigt. Die Befestigung der Schleuderscheiben 10 auf den Ausgangswellen 9 des Winkel- getriebes 4 ist derart ausgebildet, daß sich die Schleuderscheiben 10 vorzugsweise werkzeuglos von diesen Ausgangswellen 9 montieren bzw. demontieren lassen.

Den einzelnen Schleuderscheiben 10 wird das sich im Vorratsbehälter 3 des Schleuderdüngerstreuers 1 befindliche Düngemittel in genau einstellbaren Mengen zugeführt. Die rotierenden Schleuderscheiben 10 verteilen den auf die jeweilige Schleuderscheibe 10 auftreffenden Düngemittelstrom gleichmäßig über die genau einstellbare Arbeitsbreite S des Schleuderdüngerstreuers 1.

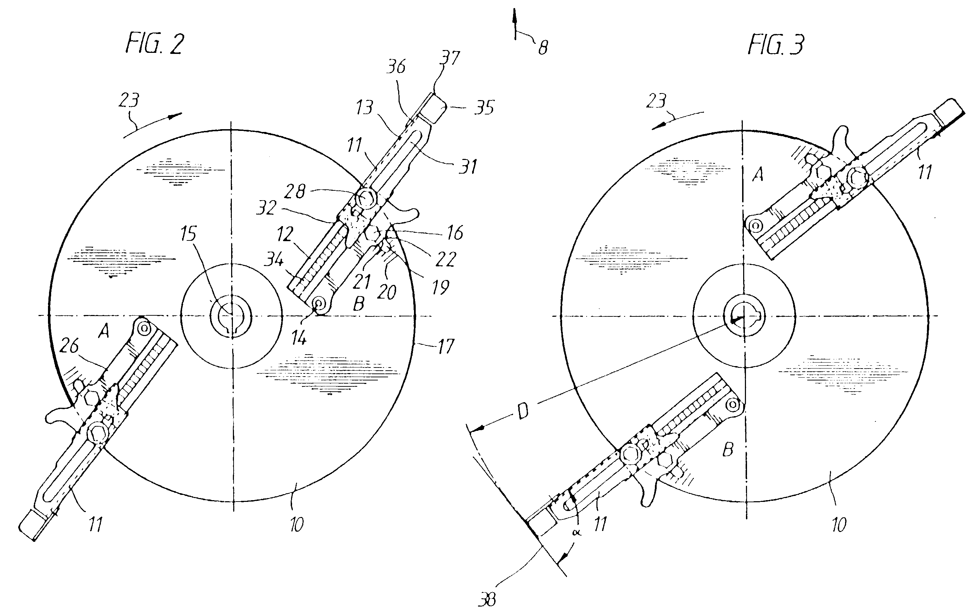

Die Fig. 2 und 3 zeigen die nebeneinander angeordneten Schleuderscheiben 10 mit den jeweils auf diesen Schleuderscheiben 10 angeordneten Wurfschaufeln 11. Bei diesen Wurfschaufeln 11 handelt es sich um relativ lange Wurfschaufeln, die für das sog. "Normalstreuen" vorgesehen sind. Die jeweiligen Wurfschaufeln 11 bestehen aus den zwei teleskopartig in Längsrichtung der Wurfschaufel 11 zueinander verschiebbaren und in verschiedenen Längen der Wurfschaufel 11 festsetzbaren Teile 12 und 13. Diese Wurfschaufeln 11 sind derart ausgebildet, daß der innere Teil 12 der Wurfschaufel 11 in radialer Richtung unverschiebbar ist. Diese längenveränderbaren Wurfschaufeln 11 sind jeweils winkelverschwenkbar auf der Schleuderscheibe 10 angeordet. Hierbei befindet sich die Schwenkachse 14 einer jeden Wurfschaufel 11 in der der Rotationsachse 15 der jeweiligen Schleuderscheibe 10 zugewandten Hälfte des inneren Teiles 12 der Wurfschaufel 11. Der Festsetzmechanismus 16 der winkelverschwenkbaren Schaufel 11 befindet sich in der dem äußeren Rand 17 der Schleuderscheibe 10 zugewandten Hälfte des inneren Teiles 12 der Wurfschaufel 11. Dieser Festsetzmechanismus 16 ist beispielsweise als lösbare Schraube 18 ausgebildet und wirkt mit dem sich in der Schleuderscheibe 10 befindlichen Langloch 19 zusammen. Im Bereich dieses Langloches 19 sind die Markierungen 20 gut sichtbar angeordnet und stellen die verschiedenen Positionen dar, in denen die winkelverschwenkbaren Wurfschaufeln 11 einstellbar sind. Hierzu wirkt die auf der Schleuderscheibe 10 aufliegende Kante 21 des inneren Teiles 12 der jeweiligen Wurfschaufel 11 als Zeiger 22 mit den auf der Schleuderscheibe 10 angeordneten Markierungen 20 zusammen. Zum Winkelverschwenken der Wurfschaufeln 11 ist es selbstverständlich auch möglich, das Langloch 19 durch einzelnen, die jeweiligen Winkelstellungen der Wurfschaufel 10 repräsentierende einzelne Löcher auszubilden. Die beiden Teile 12 und 13 der Wurfschaufel 11 weisen eine U-förmigen Querschnitt auf, wobei sich der an dem inneren Teil 12 anschließende äußere Teil 13 der Wurfschaufel 11 eine der Außenkontur der Innenschaufel 12 entsprechende Innenkontur aufweist und in Drehrichtung 23 der Schleuderscheiben 10 gesehen hinter der Innenschaufel 12 angeordnet ist. Um einen freien Raum 24 für den unteren Schenkel 25 des verschiebbaren äußeren Teiles 13 zu schaffen, ist die Innenschaufel 12 über einen Teil ihrer Tiefe zur Schaffung dieses freien Raumes 24 durchgekröpft.

Die jeweilige Lage des inneren Teiles 12 und des äußeren Teiles 13 der Wurfschaufel 11 zueinander wird mittels des als Schraubverbindung 27 ausgebildeten Festsetzmechanismusses 28 bestimmt. Dieser Festsetzmechanismus 28 zum Festsetzen der zueinander in Längsrichtung der Wurfschaufel 11 verschiebbaren Teile 12 und 13 ist zwischen den oberen Schenkein 29 und 30 der zueinander verschiebbaren Teile 12 und 13 angeordnet. Das äußere Teil 13 weist das Langloch 31 auf und ist somit stufenlos gegenüber dem inneren Teil 12 verstellbar. Die Kante 32 des ausziehbaren äußeren Teiles 13 wirkt mit der in der Tiefung 33 des oberen Schenkels 30 des inneren Teiles 12 angeordnent Skala 34 zusammen. An dem verschiebbaren äußeren Teil 13 der Wurfschaufel 11 ist ein weiteres als sog. Schwenkschaufel ausgebildetes Teil 35, welches um die Schwenkachse 36 in aufrechter Ebene schwenkbar ist, befestigt. Dieses Teil 35 läßt sich in zwei verschiedene Positionen arretieren, so daß sich die Flugkurve der von den Wurfschaufeln verteilten Düngemittelpartikel verändern läßt, so daß sich diese Wurfschaufeln sowohl für das "Normalstreuen" und für die sog. Spätdüngung verwenden lassen.

Damit die verschiedenen handelsüblichen Düngersorten exakt und in der gewünschten Arbeitsbreite verteilt werden können, lassen sich die auf den Schleuderscheiben angeordneten Wurfschaufeln individuell für die jeweils auszustreuende Düngersorte einstellen. Dieses Einstellen der Wurfschaufeln erfolgt nach den Angaben einer Streutabelle. Hierzu sind die auf einer Schleuderscheibe 10 befestigten Wurfschaufeln 11 beispielsweise mit den Buchstaben A und B gekennzeichnet. Soll jetzt beispielsweise der Dünger über eine Arbeitsbreite von 15 m ausgebracht werden, so sind in der Streutabelle beispielsweise die Angaben:
A II und 8
B III und 6
angegeben. Nun ist dem Landwirt bekannt, daß der die mit A gekennzeichnete Wurfschaufel 11 derart verschwenken muß, daß die Kante 21 mit der mit II gekennzeichneten Markierung 20 deckungsgleich ist. In dieser Position wird der Festsetzmechanismus 16 befestigt. Zur Erleichterung der Einstellung der verschiedenen Positionen läßt sich die Schraubverbindung 18 beispielsweise mit einer Flügelmitter versehen. Als nächstes löst der Landwirt den Festsetzmechanismus 28, der beispielsweise auch aus zwei nebeneinander angeordneten Schraubverbindung bestehen kann und verschiebt das äußere Teil 13 gegenüber dem inneren Teil 12 der Wurfschaufel 11 solange, bis die Kante 32 des äußeren Teiles 13 deckungsgleich mit der auf der Skala 34 angebrachten Ziffer 8 ist. In dieser Stellung wird das äußere Teil 13 der Wurfschaufel 11 mittels des als Schraubverbindung 27 ausgebildeten Festsetzmechanismusses 28 arretiert.

Nun wird die mit B gekennzeichnete Wurfschaufel 11 entsprechend den Angaben der Streutabelle eingestellt. Diese Einstellung erfolgt in der bereits beschriebenen Weise. Mittels dieser winkelverschwenkbar auf der jeweiligen Schleuderscheibe 10 angeordneten teleskopartig ausgebildeten Wurfschaufeln 11 läßt sich der Abstand D der Abstreukante 37 und der jeweilige horizontale Abstellwinkel α zwischen der Wurfschaufel 11 und der an der Stelle ihrer Abstreukante 37 an ihrer Umlaufbahn in Drehrichtung angelegten Tangente exakt einstellen. Hierdurch ist es möglich, alle handelsüblichen Düngersorten gleichmäßig unter Berücksichtigung ihrer jeweiligen Streuguteigenschaften über die genau einstellbaren Arbeitsbreiten zu verteilen.

Das Einstellen des Abstandes der jeweiligen Abstreukante 37 einer Wurfschaufel 11 und das Einstellen des Anstellwinkels α läßt sich auch durch an den Schleuderscheiben 10 angeordneten Zusatzeinrichtungen 39, die mit unterschiedlichen, die einzelnen Einstellungen repräsentierenden Markierungslöchern 40 versehen sind. Der an dem äußeren Teil 13 angeordnete Zeiger 41 ist hierbei entsprechend den Angaben einer Streutabelle mit den unterschiedlich gekennzeichneten Löchern in Deckungsgleichheit zu bringen. Die einzelnen Löcher 40 geben die verschiedenen Positionen der jeweiligen Wurfschaufeln 11 an.

Durch die entsprechende Längeneinstellung der Wurfschaufeln 11 und der entsprechenden Winkeleinstellung der Wurfschaufeln lassen sich in äußerst einfacher Weise die Streu- und Arbeitsbreiten des Schleuderdüngerstreuers auf die Abstände der beim Aussäen der sich auf der zu bestreuenden Fläche befindenen Pflanzen angelegten Fahrgassen bestimmt wird, einstellen, so daß der Dünger die den Fahrgassenabständen entsprechenden Streu- und Arbeitsbreiten und bei einer anderen Einstellung der Dünger über das doppelte oder ein ganzes Mehrfaches der Fahrgassenabstände auf demselben Feld verteilt werden kann. Die gleichmäßige Düngerverteilung wird insbesondere durch die Winkeleinstellung der Wurfschaufeln 11 gemäß der vorbeschriebenen Weise erreicht.

Durch die Winkeleinstellung der Wurfschaufeln 11 ist es möglich, die gleichen Dünger in äußerst gleichmäßiger Weise über das doppelte oder ein ganzes Mehrfaches der Fahrgassenabstände auf demselben Feld zu verteilen. Die Voraussetzung doppelte Arbeitsbreiten von 12 m einerseits und 24 m andererseits zu erreichen, wird dadurch ermöglicht, daß die Wurfschaufeln in der Länge einstellbar sind. Die Gleichmäßigkeit der Düngerverteilung bei diesen verschiedenen Arbeitsbreiten bei jeder Düngersorte wird durch die entsprechende Winkeleinstellung der Wurfschaufeln erreicht. Somit kann bei der einen Düngersorte oder Düngungsart jede Fahrgasse befahren werden, wenn der Dünger über die den Fahrgassenabständen entsprechende Breite verteilt wird und bei der anderen Düngersorte oder Düngungsart kann dann nur jede zweite oder dritte Fahrgasse befahren werden, wenn der Dünger über das doppelte oder Mehrfache des Fahrgassenabstandes entsprechenden Arbeits- und Streubreite auf demselben Feld verteilt wird, wobei jeweils eine äußerst gleichmäßige Düngerverteilung durch die entsprechende und individuelle Anstellung der Wurfschaufeln 11 entspechend den Angaben in der Streutabelle erreicht wird.

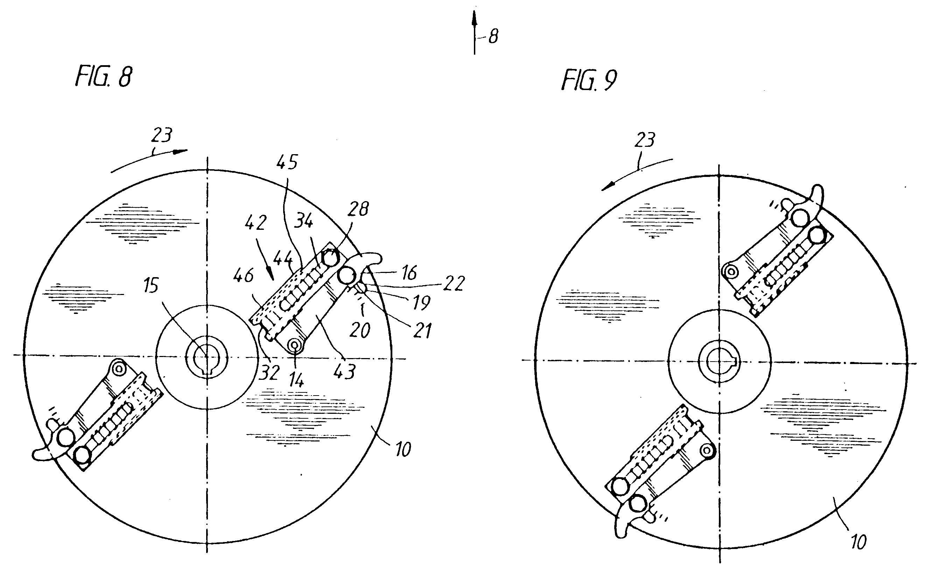

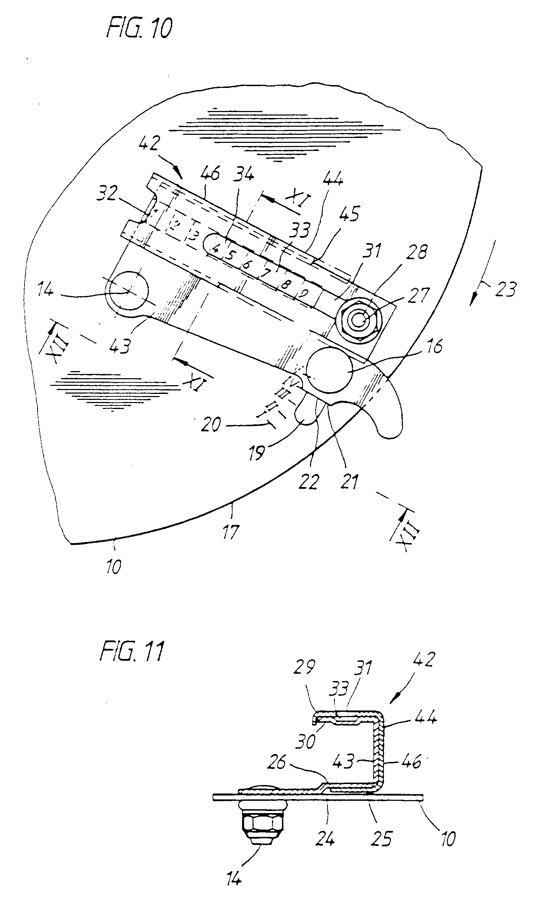

Die Fig. 8 und 9 zeigen jeweils auf den Schleuderscheiben 10 angeordnete, kürzere Wurfschaufeln 11, mit denen das sog. "Grenzstreuen" durchgeführt werden kann. Diese Grenzstreuwurfschaufeln 42 unterscheiden sich nur in der Ausbildung des verschiebbaren äußeren Teiles 13, daß bei diesen sog. Grenzstreuwurfschaufeln 43 wesentlich kürzer ist als das äußere Teil 13 der in den vorhergehenden Fig. beschriebenen Wurfschaufeln. Das innere Teil 43 der Grenzstreuwurfschaufel 42 unterscheidet sich nur hinsichtlich eines verkürzten Rückenteiles 44 von dem inneren Teil der vorab beschreibenen Wurfschaufel. Dieses Verkürzen des Rückenteiles 44 wird erforderlich, um den Abstand der Abstreukante 45 von der Rotationsachse 15 der Schleuderscheibe 10 bei der Grenzstreuwurfschaufel 42 wesentlich zu verringern. Dieses ist erforderlich, um die Arbeitsbreite der mit diesen Grenzstreuwurfschaufeln 42 versehenen Schleuderscheibe wesentlich zu verringern und ein am Feldrand steil abfallendes Streubild zu erhalten. Die jeweilige Einstellung dieser Grenzstreuwurfschaufeln 42 hinsichtlich ihrer Länge und ihres Anstellwinkels α erfolgt in bereits erwähnter Weise nach den entsprechenden Angaben einer Streutabelle. Das Rückenteil 44 des inneren Teiles 43 der Grenzstreuwurfschaufel 42 kann wie mit strichpunktierten Linien gemäß Fig. 10 dargestellt, auch unterschiedlich lang ausgebildet sein. Hierdurch ergibt sich bei nicht ausgezogenem äußeren Teil 46 eine Verlagerung der Abstreukante 45.

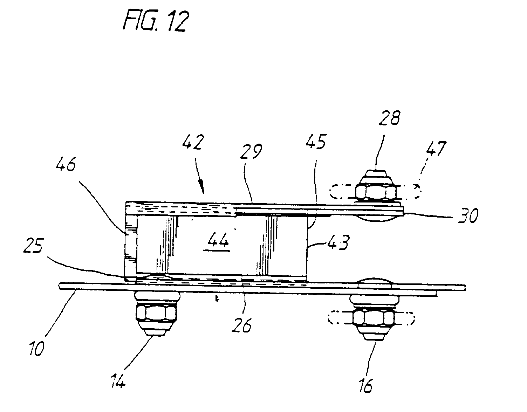

Zur Vereinfachung der jeweiligen Stellungen der Wurfschaufeln 11 und 42 kann es sinnvoll sein, die als Schraubverbindungen 18 und 27 ausgebildeten Festsetzmechanismen 16 und 28 mit den in Fig. 12 mit strichpunktierten Linien dargestellten Flügelmuttern 47 zu versehen. Aus Gründen der Stabilität kann es sinnvoll sein, den Festsetzmechanismus 28 durch mehrere einzelne, nebeneinander angeordnete Schraubverbindungen zu ersetzten. Mittels dieser auf den jeweiligen Scheuderscheiben 10 aufgesetzten längenveränderbaren und winkelverstellbaren Wurfschaufeln 11 und 42 ist es auf einfachste Weise möglich, unterschiedliche Arbeitsbreiten einzustellen, wobei die Wurfschaufeln 11 und 42 entsprechend den jeweiligen Streuguteigenschaften der jeweils auszustreuenden Düngersorte angepaßt werden kann.

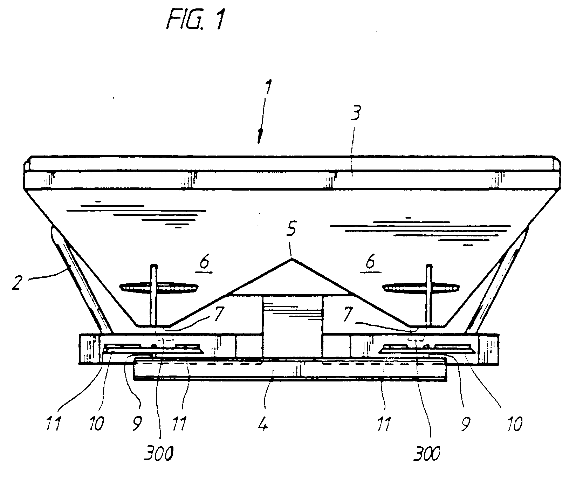

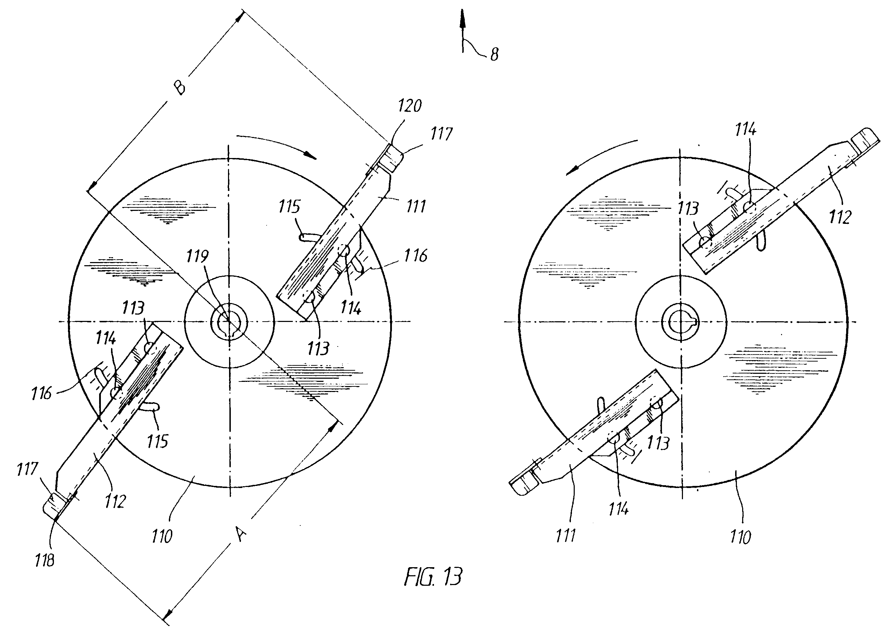

Die Schleuderscheiben 10 sind auf den Antriebswellen 9 des Schleuderstreuers 1 gemäß Fig. 1 lösbar und austauschbar gegen andere Schleuderscheiben angeordnet. Diese vorbeschriebene Schleuderscheiben können gegen die Schleuderscheiben 110 gemäß Fig. 13 ausgetauscht werden. Diese Schleuderscheiben 110 sind für das Verteilen der Düngemittel über die größeren Arbeitsbreiten von 15 bis 24 m vorgesehen. Auf den Scheuderscheiben 110 sind jeweils spiegelbildlich zueinander die kürzere Wurfschaufel 111 und die längere Wurfschaufel 112 angeordnet. Die Wurfschaufeln 111 und 112 sind jeweils mit den Schraubbolzen 113 und 114 auf die Schleuderscheibe angeordnet. Der Schraubbolzen 113 ist jeweils in einer Bohrung, die sich in der Schleuderscheibe 110 befindet, angeordnet, während der Schraubbolzen 140 sich in einem kreisförmigen Langloch 115, welches in der Schleuderscheibe 110 befindet, angebracht ist. Hierdurch sind die Wurfschaufeln 111 und 112 um den Schraubbolzen 113 winkelverschwenkbar und in unterschiedlichen Winkelstellungen auf der Schleuderscheibe 110 anzuordnen. Zur Winkeleinstellung sind auf der Schleuderscheibe 110 als Kerben 116 ausgebildete Markierungen angeordnet. Die Wurfschaufeln 111 und 112 weisen an ihrem äußeren Ende in aufrechter Ebene verschwenkbare Streuflügel auf, wobei durch das Verstellen dieser Flügel 117 der Abwurfwinkel der Düngemittelpartikel in aufrechter Ebene veränderbar ist. Die Abstreukanten 118 der längeren Wurfschaufel 112 weisen zu der Drehachse 119 einen Abstand A von zumindest 35 bis zum 50 cm, vorzugsweise 40 cm auf. Die Abstreukante 120 der kürzeren Wurfschaufeln 111 für das Streuen über "größere" Streubreiten weist. Einen Abstand B von zumindest 25 bis 35 cm vorzugsweise etwa 30 cm zur Drehachse 119 auf.

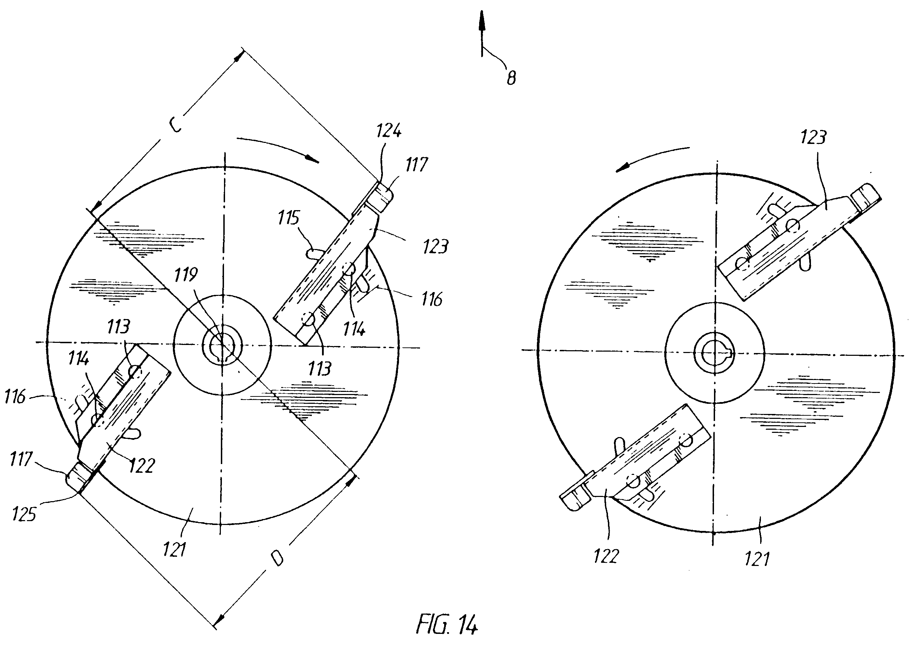

Für das Streuen der Düngemittelpartikel über kleinere Arbeitsbrerten von 6 bis 15 m werden die Schleuderscheiben 110 gemäß Fig. 13 gegen die Schleuderscheiben 121 gemäß Fig. 14 ausgetauscht. Auf diesen Schleuderscheiben 121 sind die kürzere Wurfschaufel 122 und die längere Wurfschaufel 123 angeordnet. Die Wurfschaufeln 122 und 123 sind mittels der Schraubbolzen 113 und 114 auf der Schleuderscheibe 121 befestigt. Der Schraubbolzen 114 ist in dem Langloch 115, welches in der Schleuderscheibe 121 angeordnet ist, um den Schraubbolzen 113 winkelverschwenkbar und in unterschiedlichen Stellungen mittels des Schraubbolzens 114 einzustellen und festzuklemmen Über die Markierungen, die als Kerben 116 ausgebildet sind, können die Wurfschaufeln 122 und 123 genau entsprechend der Angaben des Herstellers eingestellt werden.

Die Abstreukante 124 der längeren Wurfschaufel 123 weist zu der Drehachse 119 der Schleuderscheibe 21 einen Abstand C von 25 bis 35 cm, vorzugsweise von 28 cm auf.

Die Abstreukante 125 der kürzeren Wurfschaufel 123 für kleinere Streubreiten weist einen Abstand D von 118 bis 28 cm, vorzugsweise von 23 cm zur Drehachse 119 auf.

Es sei an dieser Stelle darauf hingewiesen, daß mit in Erfindung eingeschlossen ist, daß anstelle des Austausches der Schleuderscheiben 110 mit den Wurfschaufeln 111 und 112 gegen die Scheuderscheiben 121 mit den Wurfschaufeln 122 und 123 auch eingeschlossen sein soll, lediglich die Wurfschaufeln 111 und 112 für "größere" Streubreiten gegen die Wurfschaufeln 122 und 123 für "geringere" Streubreiten auszutauschen. Hierzu ist es dann lediglich erforderlich, die Schraubbolzen 113 und 114 zu lösen, so daß die Wurfschaufeln von den Schleuderscheiben freikommen.

Durch den Einsatz der Schleuderscheiben 110 gemäß Fig. 13 und der Schleuderscheiben 121 gemäß Fig. 14 läßt sich in äußerst einfacher Weise das erfindungsgemäße Ausbring- und Verteilverfahren von Düngemitteln in der Landwirtschaft mittels Hilfe von Schleuderstreuern durchführen. Durch den Einsatz der Schleuderscheiben 121 und 110 die die winkeleinstellbaren Wurfschaufeln 111, 112, 122 und 123 aufweisen, welche in Scheibenebene mit unterschiedlichen Winkeln zur Radialen einstellbar sind läßt sich der Dünger über eine kleinere (einfache) Streu- und Arbeitsbreite und über das Doppelte oder Mehrfache dieser einfachen Streu- und Arbeitsbreite in gleichmäßiger Weise verteilen. Die Streu- und Arbeitsbreite des Schleuderdüngerstreuers wird durch die Abstände der beim Aussäen der sich auf der zu bestreuenden Fläche befindenen Pflanzen angelegten Fahrgassen bestimmt, wobei Dünger sowohl über die den Fahrgassenabständen entsprechenden Streu- und Arbeitsbreiten als auch Dünger über das doppelte oder ein ganzes Mehrfaches der Fahrgassenabstände auf dem gleichen Feld verteilt werden kann, wobei die gleichmäßige Düngerverteilung durch die entsprechende Einstellung der Wurfschaufeln im Winkel zur Radialen entsprechend der durch eine Streutabelle vorgegebenen Werte anhand von Skalen 116 ermöglicht wird. Für Streu- und Arbeitsbreiten von 9, 10, 12, 15, 16 und 18 m sind die Schleuderscheiben 121 mit den Wurfschaufeln 122 und 123 gemäß Fig. 14 bestimmt. Durch die entsprechende Winkelanstellung der Wurfschaufeln 122 und 123 anhand der Skalen 116 in Scheibenebene wird eine gleichmäßige Düngerverteilung über die vorgenannten Arbeitsbreiten durch die entsprechende Einstellung der Wurfschaufeln gewährleistet. Um nun die doppelte Streu- und Arbeitsbreite von 18, 20, 24, 30, 32 und 36m zu erreichen, werden die Schleuderscheiben 110 mit den Wurfschaufeln 111 und 112 auf den Antriebswellen 9 des Schleuderstreuers 1 erreicht. Die jeweilige Arbeitsbreite mit einer äußerst gleichmäßigen Düngerverteilung wird durch die entsprechende Winkelanstellung der Wurfschaufeln 111 und 112 in Scheibenebene anhand der Skalen 116 entsprechend der jeweils vorgegebenen Werte einer Streutabelle eingestellt.

Eine zusätzliche Einstellung kann bei manchen Schleuderstreuern noch weiter verbessert werden, indem durch eine unterhalb der Auslauföffnung angeordnete Rutsche 300, die in Fig. 1 eingezeichnet ist, erreicht werden, daß diese Rutsche 300, die einstellbar ausgebildet ist, der Aufgabepunkt des Düngers auf den Schleuderscheiben entsprechend der gewünschten Arbeitsbreite und gleichmäßigen Verteilung verändert werden. Auch diese Einstellung kann einer Streutabelle entnommen werden.

Somit ist es also durch den Einsatz der Schleuderscheiben 110 und 121 gemäß Fig. 13 und 14 möglich, bei der einen Düngersorte oder Düngungsart jede Fahrgasse zu befahren, wenn der Dünger über die den Fahrgassenabstand entsprechende Breite verteilt wird und bei der anderen Düngersorte oder Düngungsart jede zweite oder dritte Fahrgasse zu befahren, wenn der Dünger über das Doppelte oder Mehrfache des Fahrgassenabstandes entsprechenden Arbeits- und Streubreite auf demselben Feld verteilt werden soll. Dieses kann beispielsweise der Fall sein, wenn feinkörnige und/oder hochprozentige Stickstoffdünger über die den Fahrgassenabständenen entsprechenden Streu- und Arbeitsbreiten verteilt werden sollen, während andere Dünger über die Mehrfache, vorzugsweise über die doppelte Breite als die Fahrgassenabstände verteilt werden. Hierdurch ist es also möglich, sehr rationell und kostengünstig den Dünger zu verteilen. Diese ist vor allem von sehr großem Vorteil, wenn der Düngerstreuer in sehr windreichen Gebieten eingesetzt werden sollen, so daß bei windigem Wetter der Dünger über die kleinere Arbeitsbreite mit den Schleuderscheiben gemäß Fig. 14 verteilt werden, während der Dünger bei windstillem Wetter in äußerst gleichmäßiger Verteilung mit den Schleuderscheiben gemäß Fig. 13 über die doppelte oder dreifache Breite der Fahrgassenabstände verteilt werden kann. Die Feineinstellung zur Erreichung eines äußerst gleichmäßigen Streubildes geschieht durch die Winkeleinstellung der Wurfschaufeln 110, 111, 122, 123 anhand der Skalen 116 in Scheibenebene.

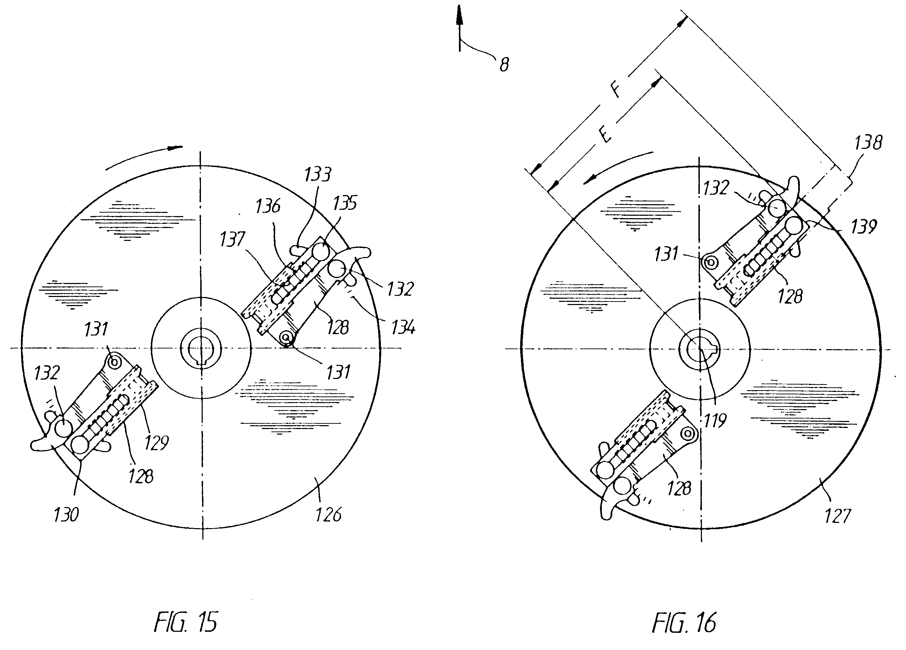

Zur Durchführung des "Grenzstreuens", je nach dem auf welcher Seite des Schleuderdüngerstreuers die Feldrandgrenze liegt, ist eine der in den Fig. 15 und 16 dargestellte Grenzstreuscheibe einzusetzen. Wenn die Feldrandgrenze auf der linken Seite des Schleuderdüngerstreuers liegt, ist die linke Schleuderscheibe gemäß Fig. 13 oder 14 gegen die Schleuderscheibe 126 für das "Grenzstreuen" gemäß Fig. 15 auszutauschen. Liegt die Feldrandgrenze auf der rechten Seite des Schleuderdüngerstreuers, so ist die rechte Schleuderscheibe gemäß Fig. 13 bzw. 14 gegen die Schleuderscheibe 127 für das "Grenzstreuen" gemäß Fig. 16 auszutauschen. Auf den Grenzstreuscheiben 126 bzw. 127 sind die teleskopartig längenveränderbaren Wurfschaufeln 128 angeordnet. Die Wurfschaufeln 128 bestehen aus dem inneren Teil 129 und dem äußeren Teil 130. Das innere Teil 129 ist mittels der Schraubbolzen 131 und 132 auf der Grenzstreuscheibe 126 angeordnet. Der Schraubbolzen 132 ist in dem kreisförmigen Langloch 133, welches sich in der Schleuderscheibe 126 befindet, angeordnet. Hierdurch ist die Schaufel 128 um den Schraubbolzen 131 angeordnet und in verschiedenen Positionen mittels des Schraubbolzens 132 festzuklemmen. Das Einstellen der Wurfschaufel 128 wird durch die als Kerbe 134 ausgebildete Markierung erleichtert. Die jeweilige einstellung wird vom Hersteller angegeben. Der äußere Teil 130 der Grenzstreuschaufel 128 ist mittels des Schraubbolzens 135 an dem inneren Teil 129 der Grenzstreuschaufel 128 befestigt. Damit das äußere Teil 130 der Grenzstreuschaufel 128 gegenüber dem inneren Teil 129 der Grenzstreuschaufel teleskopartig längenveränderbar und in unterschiedlichen Positionen festsetzbar ist, weist weist das äußere Teil 130 das Langloch 136 auf, in dem der Schraubbolzen 135, der an dem inneren Teil 129 der Grenzstreuschaufel 128 befestigt ist, geführt ist. Ebenfalls sind an der Grenzstreuschaufel 128 zwischen dem inneren Teil 129 und dem äußeren Teil 130 als Kerben ausgebildete Markierungen 137 vorgesehen, um so die Länge der Wurfschaufeln 128 in einfacher Weise entsprechend der Herstellerangaben einstellen zu können. Die Grenzstreuschaufel 128 wird für "geringere" Grenzstreuabstände in die mit durchzogenen Linien dargestellte Stellung gebracht, während sie für "größere" Arbeitsbreiten in die mit strichpunktierte Linien angedeutete Stellung 138 zu bringen und zu befestigen ist. Die Wurfschaufeln 128 sind in unterschiedlichen Längen einzustellen, so daß die Abstreukante 139 der Wurfschaufel 128 für geringere Grenzstreuabstände einen Abstand von zumindestens 10 cm, vorzugsweise 13 cm und für das Bestreuen von größeren Grenzstreuabständen einen Abstand F von bis zu 32 cm, vorzugsweise 28 cm aufweist.

Der Unterschied zwischen den Abständen A und B sowie C und D der Abstreukanten der Streuschaufeln der beiden Streuscheiben 110 und 121 für die "größere" und die "kleinere" Streubreite zur Drehachse muß zumindestens 3 bis 10 cm betragen.

Des weiteren müssen die Wurfschaufeln 122,123 für die "kleineren" Streubreiten sowie die Wurfschaufeln 111, 112 für die "größeren" Streubreiten so ausgebildet sein, daß die Abstreukante der Wurfschaufeln für die größeren Streubreiten um zumindest 5 cm und/oder 1/4 des Abstreukantenabstandes weiter von der Drehachse 119 entfernt sind als die Abstreukanten der Wurfschaufeln 122, 123 für die "kleineren" Streubreiten, während die Streukanten der Wurfschaufeln für die kleineren Streubreiten um zumindest 5 cm und/oder 1/4 des Abstreukantenabstandes weiter von der Drehachse 119 als die Abstreukanten der Wurfschaufeln 128 für das "Grenzstreuen" entfernt sein müssen.

Um die erfindungsgemäßen Wirkungen zu erzielen, weisen die Wurfschaufeln 111,112 für das Streuen über die "größeren" Streubreiten von 15 bis 24 m an ihren Abstreukanten 118, 120 eine Umfangsgeschwindigkeit von etwa 18 bis 37 m/sec, vorzugsweise ca. 23 m/sec für die kürzere Wurfschaufel 111 und ca. 30 m/sec für die längere Wurfschaufel 112 auf. Die Umfangsgeschwindigkeiten an den Abstreukanten 124,125 der Wurfschaufeln 122,123 für "kleinere" Streubreiten von 6 bis 15 betragen etwa 13 bis 26 m/sec, vorzugsweise ca. 17 m/sec für die kürzere Wurfschaufel 122 und ca. 21 m/sec für die längere Wurfschaufel 123. Die Umfangsgeschwindigkeit an den Abstreukanten 139 der Wurfschaufeln 128 für das Grenzstreuen betragen zwischen etwa 8 m/sec, vorzugsweise ca. 10 m/sec für kleinere Grenzstreuabstände von 5 und 6 m und 26 m/sec, vorzugsweise 21 m/sec für größere Grenzstreuabstände von 110 bis 112 m.

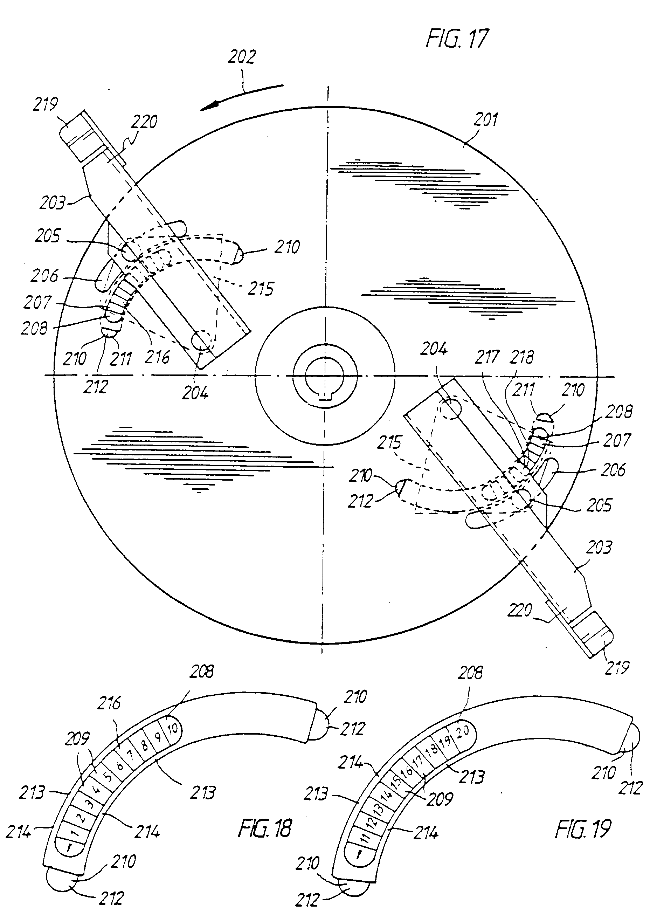

Die Fig. 17 zeigt die rechte Schleuderscheibe 10 des Schleuderdüngerstreuers 1, die als "Normaldstreuscheibe" 201 ausgebildet ist. Die Schleuderscheiben 10 des Schleuderdüngerstreuers 1 werden gegenläufig angetrieben, wobei die rechte Schleuderscheibe 10 gemäß Fig. 17 in Pfeilrichtung 202 angetrieben wird. Die Schleuderscheibe 201 weist die beiden Wurfschaufeln 203 auf, die für das sog. "Normalstreuen" vorgesehen sind. Die jeweiligen Wurfschaufeln 203 sind winkelverschwenkbar um den Drehpunkt 204 auf der Schleuderscheibe 201 befestigt. Diese winkelverschwenkbaren Wurfschaufeln 203 weisen den Festsetzmechanismus 205 auf, der beispielsweise als lösbare Schraube ausgebildet ist und mit dem sich in der Schleuderscheibe 201 befindlichen Langloch 206 zusammenwirkt. Parallel zu dem Langloch 206 ist die Aussparung 207 in die Schleuderscheibe 201 eingestanzt. In diese Aussparung 207 ist die Einstellskala 208 mit ihren Markierungspunkten 209 von unten in die Schleuderscheibe 201 eingesetzt. Diese Skala 208 ist beispielsweise aus Kunststoff hergestellt und weist an ihren gegenüberliegenden Seiten 210 durch die Aussparungen 211 fassende Halterungen 212, die beispielsweise als Schnappverschlüsse ausgebildet sind, auf. Zur besseren Abstützung gegenüber der Schleuderscheibe 201 weisen die in die Aussparungen 207 eingesetzten Skalen 208 jeweils an ihren Längsseiten 213 unter die Schleuderscheibe 201 fassende Streifen 214 auf. Damit die Einstellskala 208 auch unterhalb der Schleuderscheibe 201 abgestützt wird, sind unterhalb der jeweiligen Skala 208 und der Schleuderscheibe 201 mit den Wurfschaufeln 203 jeweils verschwenkbare Halteelemente 215 angeorndet. Dieses mit der jeweiligen Wurfschaufel 203 verschwenkbare Halteelement 215 ist an dem Drehpunkt 204 der Wurfschaufel 203 und dem Festsetzmechanismus 205 befestigt. Die jeweiligen Halteelemente 215 verhindern, daß die Einstellskalen 208 aus den Aussparungen 207 der Schleuderscheibe 201 herausfällen.

Das Anzeigenfeld 216 der Einstellskala 208 weist die gleiche Kontur auf, wie die Aussparung 207 der Schleuderscheibe 201. Damit die Düngemittelpartikel gleichmäßig über den Arbeitsbereich des Schleuderdüngerstreuers 1 verteilt werden, sind die Wurfschaufeln 203 dieser Schleuderscheiben 201 unterschiedlich lang ausgebildet. Die Anordnung unterschiedlich langer Wurfschaufeln 203 auf der Schleuderscheibe 201 gewährleistet, daß die Düngemittelpartikel gleichmäßig über die gesamte Arbeitsbreite verteilt werden. Bei der Schleuderscheibe 201 gemäß Fig. 17 lassen sich nun die Anstellwinkel der Wurfschaufeln 203 unterschiedlich einstellen, indem die Wurfschaufeln 203 um den Drehpunkt 204 im Bereich des Langloches 206 verschwenkt werden. Um nun bei einer ganz bestimmten Düngersorte, unter Berücksichtigung der speziellen Streuguteigenschaften des auszustreuenden Düngers, eine ganz bestimmte Arbeitsbreite zu erzielen, ist es erforderlich, daß die Wurfschaufeln 203 zur Erzeugung eines optimalen Streubildes unterschiedlich angestellt werden. Aus diesem Grunde sind die Skalen 208 der einzelnen Wurfschaufeln 203 mit unterschiedlichen Markierungspunkten ausgebildet, so daß die einzelnen Markierungspunkte der Einstellskalen 208 jeweils nur einmal vorhanden sind. Hierdurch wird gewährleistet, daß die Wurfschaufeln 203 unverwechselbar einstellbar sind, d.h. es ist nicht möglich, die aus der Streutabelle entnommenen Einstelldaten, die einer bestimmten Wurfschaufel 203 zugeordnet werden müssen, für die Wurfschaufeln 203 zu vertauschen.

Soll nun beispielsweise eine ganz bestimmte Düngersorte über einen Streubereich von 16 m verteilt werden, schlägt der Benutzer des Schleuderdüngerstreuers 1 die zu dem Streuer zugehörige Streutabelle auf und ermittelt die Einstelldaten für die winkelverschwenkbaren Wurfschaufeln 203 der als Normalstreuscheibe 201 ausgebildeten Schleuderscheibe für die auszustreuenden Düngermittelsorten bei der gewünschten Streubreite. Werden hierfür nun der Streutabelle beispielsweise die Daten
"5" und "16"
entnommen, werden die Wurfschaufeln 203 der Schleuderscheibe 201 nach Lösen der jeweiligen Festsetzmechanismen 205 derart verschwenkt, bis daß diese entsprechenden Zahlen bzw. Markierungspunkte 209 des Anzeigenfeldes 216 an der als Zeiger 217 ausgebildeten Kante 218 der jeweiligen Wurfschaufel 203 ablesbar sind. Dadurch, daß die Anzeigenfelder 216 der den beiden Wurfschaufeln 203 zugeordneten Skalen 208 unterschiedlich ausgebildet sind, ist eine unverwechselbare Einstellung der winkelverschwenkbaren Wurfschaufeln 203, der als Normalstreuscheibe 201 ausgebildeten Schleuderscheibe, gewährleistet. Streufehler durch unsachgemäße Einstellung der Wurfschaufeln 203 sind somit völlig ausgeschlossen.

Damit die Streuscheiben 201 auch für die sog. Spätdüngung eingesetzt werden können, weisen die Wurfschaufeln 203 jeweils an ihren äußeren Enden als sog. Schwenkschaufeln ausgebildete Teile 219 auf, welche um die Schwenkachse 220 in aufrechter Ebene schwenkbar sind. Dieses Teil 219 läßt sich in zwei verschiedene Positionen arretieren, so daß sich die Flugkurve der von den Wurfschaufeln 203 abgeschleuderten Düngemittelpartikel verändern läßt, so daß sich Pflanzen in unterschiedlichen Wachstumsstadien düngen lassen.

Damit nun bei der Montage der einzelnen Skalen 208 an den Schleuderscheiben 201 keine Verwechselung vorgenommen werden kann, sind die Einstellskalen 208 unterschiedlich lang ausgebildet, d.h., die sich gegenüberliegenden Stirnseiten 210 weisen einen unterschiedlich großen Abstand voneinander auf, so daß sie nur in eine bestimmte Aussparung 207 bzw. 211 passen und so nicht vertauscht werden können. Hierdurch werden auf jeder Scheibe 201 zwei unterschiedliche Skalen 208 montiert, so daß jeder Wurfschaufel 203 eine eigene spezielle Skala 208 zugewiesen wird. Hierdurch sind die einzelnen Stellungen der Wurfschaufeln 203 genau definiert und somit unverwechselbar.

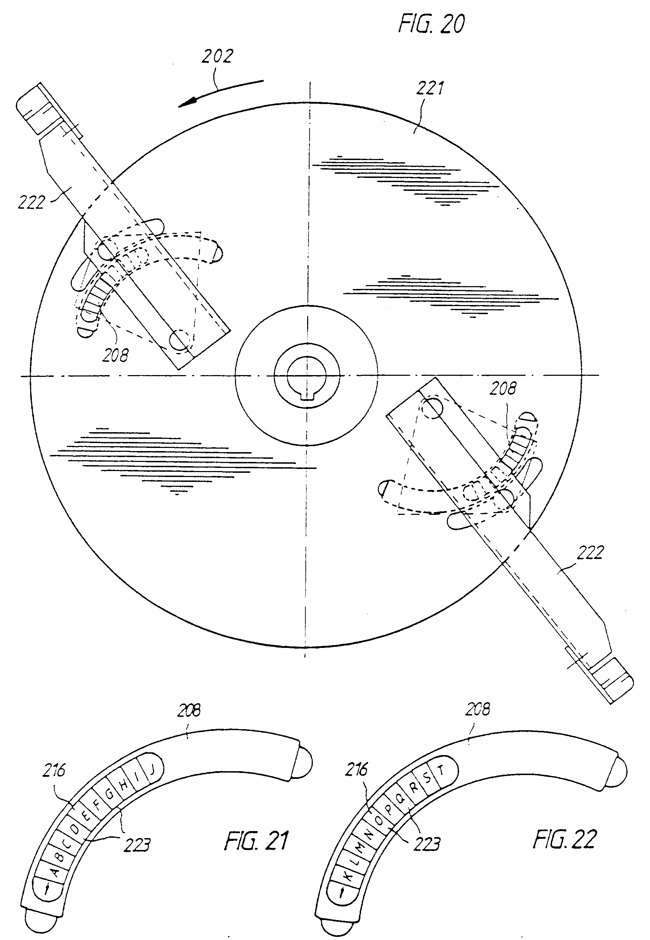

Bei der Schleuderscheibe 221 gemäß Fig. 20 handelt es sich um die rechte Schleuderscheibe des Schleuderdüngerstreuers 1, die für das sog. "Breitstreuen" ausgebildet ist Diese Schleuderscheibe 221 unterscheidet sich nur durch die längeren Wurfschaufeln 222, die die Düngemittel über einen weiteren Streubereich abschleudern, von der Normalstreuscheibe 201 gemäß Fig. 17. Die Anzeigenfelder 216 der Einstellskalen 208 dieser Breitstreuscheibe 221 weisen ebenfalls für die beiden ungleich langen Wurfschaufeln 222 ungleiche Markierungspunkte 223 bzw. Ziffern auf, damit auch hier ein unverwechselbares Einstellen der winkelverschwenkbaren Wurfschaufeln 222 der als Breitstreuscheibe 221 ausgebildeten Schleuderscheibe gewährleistet ist.

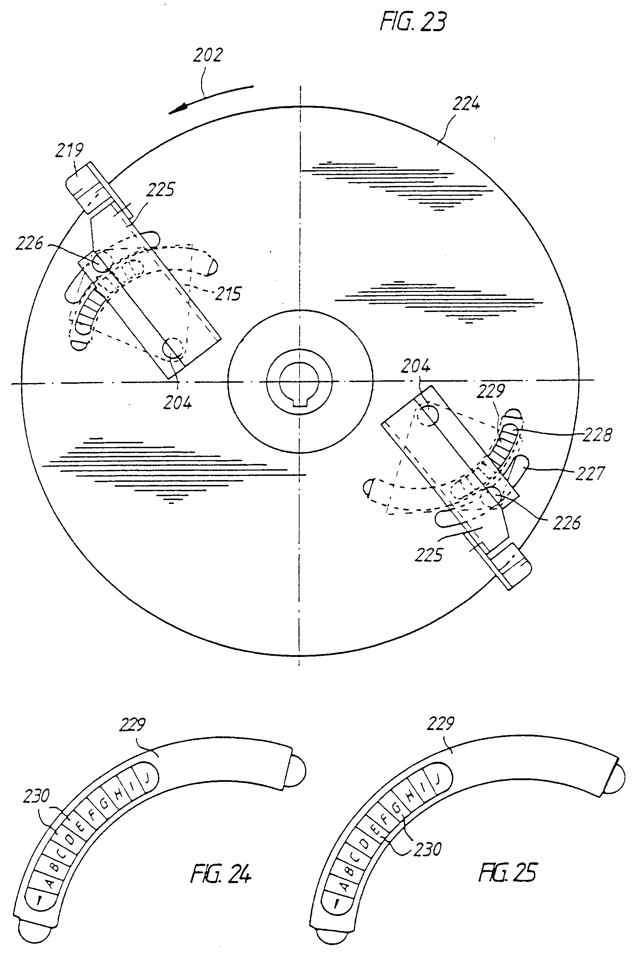

Bei der Schleuderscheibe 224 gemäß Fig. 23 handelt es sich um eine rechte Schleuderscheibe des Schleuderdüngerstreuers 1, die als Grenzstreuscheibe ausgebildet ist. Die Grenzstreuscheibe 224 weist die gleich langen Wurfschaufeln 225 auf, die ebenfalls winkelverschwenkbar um den Drehpunkt 204 an der Schleuderscheibe 224 befestigt sind. Die Wurfschaufeln 225 weisen den Festsetzmechanismus 226 auf, der beispielsweise als lösbare Schraube ausgebildet ist, und mit dem in der Schleuderscheibe 224 sich befindlichen Langloch 227 zusammenwirkt. Parallel zum Langloch 227 befindet sich die ebenfalls als Langloch ausgebildete Aussparung 228 in der Schleuderscheibe 224. In diese Aussparung 228 ragt von unten das als Kunststoffteil ausgebildete Einstellskalenelement 229 hinein. Für die als Grenzstreuscheibe eingesetzte Schleuderscheibe 224 sind Einstellskalen 229 mit gleichen Markierungen bzw. Zeichen 230 für beide Wurfschaufeln 225 vorgesehen, da die Einstellung beider Wurfschaufeln 225 gleich ist. Dieses ist erforderlich, um ein am Feldrand steil abfallendes Streubild zu erzeugen.

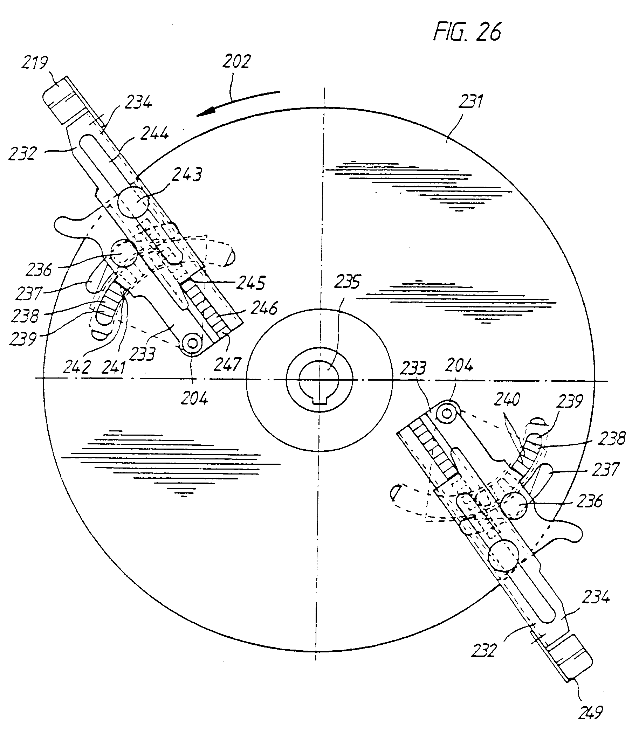

Bei der Schleuderscheibe 231 gemäß Fig. 26 handelt es sich um eine Schleuderscheibe die sich gleichzeitig für das sog. "Normal- und Breitstreuen" einsetzen läßt. Diese Schleuderscheibe 231 weist die Wurfschaufeln 232 auf. Die jeweiligen Wurfschaufeln 232 bestehen aus den zwei teleskopartig in Längsrichtung der Wurfschaufeln 232 zueinander verschiebbaren und in verschiedenen Längen der Wurfschaufeln 232 festsetzbaren Teile 233 und 234. Diese Wurfschaufeln 232 sind derart ausgebildet, daß der innere Teil 233 der Wurfschaufel 232 in radialer Richtung unverschiebbar ist. Diese längenveränderbaren Wurfschaufeln 232 sind jeweils winkelverschwenkbar auf der Schleuderscheibe 231 angeordnet. Hierbei befindet sich die Schwenkachse 204 einer jeden Wurfschaufel 232 in der der Rotationsachse 235 der jeweiligen Schleuderscheibe 231 zugewandten Hälfte des inneren Teiles 233 der Wurfschaufel 232. Der Festsetzmechanismus 236 der winkelverschwenkbaren Schaufeln 232 befindet sich in der dem äußeren Rand der Schleuderscheibe 231 zugewandten Hälfte des inneren Teiles 233 der Wurfschaufel 232. Dieser Festsetzmechanismus 236 ist beispielsweise als lösbare Schraube ausgebildet und wirkt mit dem sich in der Schleuderscheibe 231 befindlichen Langloch 237 zusammen. Parallel zu dem Langloch 237 befindet sich die Aussparung 238 in der Schleuderscheibe 231, in der sich die Einstellskala 239 mit den Markierungen 240 befindet, die die verschiedenen Positionen darstellen, in denen die winkelverschwenkbaren Wurfschaufeln 232 einstellbar sind. Hierzu wirkt die Kante 241 des inneren Teiles 233 der Wurfschaufel 232 als Zeiger 242 mit den Markierungen 240 der Einstellskala 239 zusammen.

Die jeweilige Lage des inneren Teiles 233 und des äußeren Teiles 234 der Wurfschaufel 232 zueinander wird mittels des als Schraubverbindung ausgebildeten Festsetzmechanismuses 243 bestimmt. Dieser Festsetzmechanismus 243 zum Festsetzen der zueinander in Längsrichtung der Wurfschaufeln 232 verschiebbaren Teile 233 und 234 ist zwischen den oberen Schenkeln der zueinander verschiebbaren Teile 233 und 234 angeordnet. Das äußere Teil 234 weist das Langloch 244 auf und ist somit stufenlos gegenüber dem inneren Teil 233 verstellbar. Die Kante 245 des ausziehbaren äußeren Teiles 234 wirkt mit der in der Vertiefung 246 des oberen Schenkels des inneren Teiles 233 angeordneten Skala 247 zusammen.

Damit nun die Düngemittel gleichmäßig über die zu bestreuende Fläche verteilt werden können, ist es notwendig, die Wurfschaufeln 232 der Schleuderscheibe 231 entsprechend der gewünschten Arbeitsbreite und des ausstreuenden Düngematerials, unter Berücksichtigung des jeweiligen Streuguteigenschaften, individuell anhand einer Streutabelle einzustellen. Hierzu ist es erforderlich, daß die beiden Wurfschaufeln 232 der Schleuderscheibe 231 in ihrem Winkel unterschiedlich angestellt werden und die Länge einer jeden Wurfschaufel 232 individuell anhand der Angaben der Streutabelle eingestellt werden. Damit es auch hier nicht zu Verwechselungen bei der Einstellung der Länge der teleskopartigen Wurfschaufeln 232 kommt, weisen die Skalen 247 der inneren Teile 233 unterschiedliche Bezeichnungen 248 auf. Um nun eine unverwechselbare Winkeleinstellung ebenfals der Wurfschaufeln 232 der Schleuderscheibe 240 vorzunehmen, weisen die Skalen 239 für die Winkelverstellung unterschiedliche Bezeichnungen 231 auf, so daß die Winkeleinstellung unverwechselbar wird.

Soll jetzt beispielsweise eine ganz bestimmte Düngersorte über einen Arbeitsbereich von 20 m ausgebracht werden, so sind in der Streutabelle unter der Berücksichtigung der jeweiligen Düngersorte und der gewünschten Arbeitsbreite beispielsweise die Angaben:
"D" und "9"
"O" und "20"
angegeben. Da diese Bezeichnungen nur einmal auftauchen, lassen sich die Wurfschaufeln 232 exakt und unverwechselbar einstellen. Dem Landwirt ist nun bekannt, daß er die entsprechende Wurfschaufel 232, die mit der jeweiligen Einstellskala 239, auf der sich der Buchstabe "D" befindet, derart verschwenken muß, daß die Kante 241 mit der mit "D" gekennzeichneten Markierung 240 deckungsgleich ist. In dieser Position wird der Festsetzmechanismus 236 befestigt. Zur Erleichterung der Einstellung der verschiedenen Positionen läßt sich die Schraubverbindung 236 beispielsweise mit einer Flügelmutter versehen. Als nächstes löst der Landwirt den Festsetzmechanismus 243, der beispielsweise auch aus zwei nebeneinander angeordneten Schraubverbindungen bestehen kann und verschiebt das äußere Teil 234 gegenüber dem inneren Teil 233 der Wurfschaufel 232 so lange, bis die Kante 245 des äußeren Teiles 234 deckungsgleich mit der auf der Skala 247 angebrachten Ziffer "9" ist. In dieser Stellung wird das äußere Teile 234 der Wurfschufel 232 mittels des als Schraubverbindung ausgebildeten Festsetzmechanismuses 243 arretiert.

Nun wird die andere Wurfschaufel 232 entsprechend den Angaben ("0" und "20") der Streutabelle eingestellt. Diese Einstellung erfolgt in der bereits beschriebenen Weise. Mittels dieser winkelverschwenkbar auf den jeweiligen Schleuderscheiben 231 angeordneten, teleskopartig ausgebildeten Wurfschaufeln 232 läßt sich der Abstand der Abstreukante 249 und der jeweilige horizontale Anstellwinkel zwischen der Wurfschaufel 232 und der an der Stelle ihrer Abstreukante 249 an ihrer Umlaufbahn in Drehrichtung angelegten Tangente exakt einstellen. Hierdurch ist es möglich, alle handelsüblichen Düngersorten gleichmäßig unter Berücksichtigung ihrer jeweiligen Streueigenschaften über die genau einstellbaren Arbeitsbreiten zu verteilen.

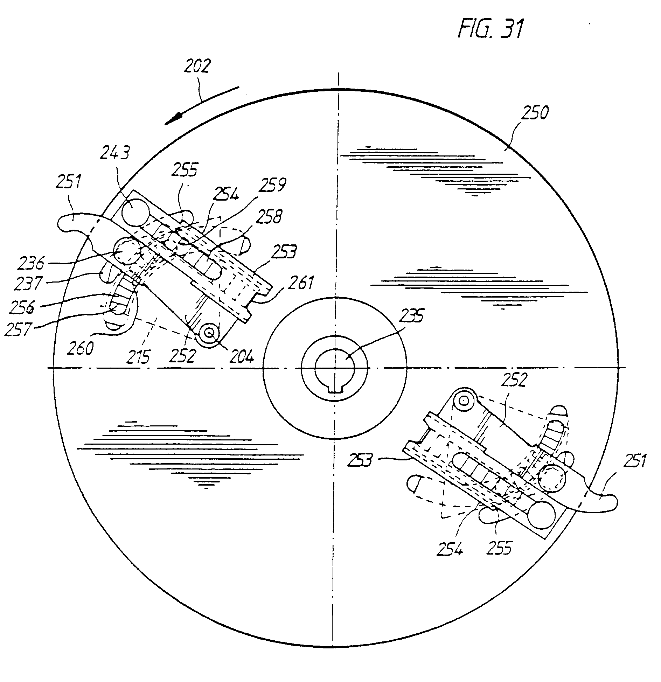

Die Schleuderscheibe 250 gemäß Fig. 31 ist mit zwei teleskopartigen in Längsrichtung der Wurfschaufeln 251 zueinander verschiebbaren und bei verschiedenen Längen der Wurfschaufeln 251 festsetzbaren Teilen 252 und 253 ausgerüstet. Die Wurfschaufeln 251 sind ebenfalls winkelverschwenkbar auf der Schleuderscheibe 250, die als Grenzstreuscheibe ausgebildet ist, angeordnet. Bei diesen teleskopartig ausgebildeten Wurfschaufeln 251 für das Grenzstreuen handelt es sich im wesentlichen um kürze Wurfschaufeln 251, als bei den Wurfschaufeln der Schleuderscheibe 231 gemäß Fig. 26. Diese Grenzstreuwurfschaufeln 251 unterscheiden sich nur in der Ausbildung des verschiebbaren äußeren Teiles 253, daß bei diesen sog. Grenzstreuwurfschaufeln 251 wesentlich kürzer ist, als das äußere Teil 234 der in der vorhergehenden Fig. 26 beschriebenen Wurfschaufeln 232. Das innere Teil 252 der Grenzstreuwurfschaufeln 251 unterscheidet sich nur hinsichtlich eines verkürzten Rückenteiles 254 von dem inneren Teil 233 der Wurfschaufel 232 der Schleuderscheibe 231 gemäß Fig. 26. Dieses Verkürzen des Rückenteiles 254 wird erforderlich, um den Abstand der Abstreukante 255 von der Rotationsachse 235 der Schleuderscheibe 250 bei den Grenzstreuwurfschaufeln 251 wesentlich zu verringern. Dieses ist erforderlich, um die Arbeitsbreite der mit diesen Grenzstreuwurfschaufeln 251 versehenen Schleuderscheiben 250 wesentlich zu verringern um ein am Feldrand steil abfallendes Streubild zu erhalten. Die jeweilige Einstellung dieser winkelverschwenkbaren Grenzstreuwurfschaufeln 251 hinsichtlich ihrer Länge und ihres Anstellwinkels erfolgt in bereits erwähnter Weise nach den entsprechenden Angaben einer Streutabelle. Bei dieser als Grenzstreuscheibe ausgebildeten Schleuderscheibe 250 sind die Einstellskalen für die Einstellung der Winkelverschwenkbarkeit und der Länge jeweils gleich ausgebildet. Die Einstellskala 256 einer jeden Wurfschaufel 251 weist die gleichen Markierungselemente 257 für die Einstellung der Winkelverschwenkbarkeit auf. Die jeweiligen Einstellskalen 258 für die Längenveränderung der Wurfschaufeln 251 weisen ebenfalls die gleichen Markierungselemente 259 für die beiden, auf der Schleuderscheibe 250 jeweils angeordneten Wurfschaufeln 251 auf. Die Kante 260 des inneren Teiles 252 der Wurfschaufel 250 wirkt mit der Einstellskala 256 für die Winkelverschwenkbarkeit zusammen, während die Kante 261 des äußeren Teiles 253 der Wurfschaufel 250 mit der Einstellskala 258 für die Längenveränderung zusammenwirkt.

## Patentansprüche

1. Ausbring- und Verteilverfahren von Düngemitteln in der Landwirtschaft mit Hilfe von Schleuderstreuern mit rotierend angetriebenen und mit auswechselbaren und/oder veränderbaren Wurfschaufeln ausgestatteten Wurfelementen, mittels derer die Düngemittelpartikel über vorbestimmbare Streu- und Arbeitsbreiten abgeschleudert werden, wobei die Streu- und Arbeitsbreite durch die Abstände der beim Aussäen der sich auf der zu bestreuenden Fläche befindenden Pflanzen angelegten Fahrgassen bestimmt wird, wobei Dünger durch Verwendung verschiedenartiger, gegeneinander austauschbarer Wurfschaufeln entweder über die den Fahrgassenabständen entsprechenden Streu- und Arbeitsbreiten, oder über das Doppelte oder ein ganzes Mehrfaches der Fahrgassenabstände auf demselben Feld verteilt wird, und wobei die gleichmäßige Düngerverteilung durch die Einstellung der Wurfschaufeln (11, 111, 112, 122, 123, 203, 222) oder die Einstellung des Aufgabepunktes des Düngers auf die Wurfelemente (10, 110, 121, 201, 221) gewährleistet wird.

2. Verfahren nach Anspruch 1, **dadurch gekennzeichnet,** daß bei der einen Düngersorte oder Düngungsart jede Fahrgasse befahren wird, wenn der Dünger über die den Fahrgassenabstand entsprechende Breite verteilt wird, und daß bei der anderen Düngersorte oder Düngungsart nur jede zweite oder dritte Fahrgasse befahren wird, wenn der Dünger über das Doppelte oder Mehrfache des Fahrgassenabstandes entsprechenden Arbeits- und Streubreite auf demselben Feld verteilt wird.

3. Verfahren nach Anspruch 1 oder 2. **dadurch gekennzeichnet,** daß feinkörnige und/oder hochprozentige Stickstoffdünger über die den Fahrgassenabständen entsprechende Streu- und Arbeitsbreite verteilt werden, und daß andere Dünger über die mehrfache, vorzugsweise die doppelte Breite als die Fahrgassenabstände verteilt werden.

4. Verfahren nach Anspruch 1, **dadurch gekennzeichnet,** daß zum Erzielen der verschiedenen Arbeitsbreiten unterschiedlich lange Wurfschaufeln (11, 111, 112, 122, 123, 203, 222) verwendet werden.

5. Verfahren nach Anspruch 1 , wobei der Schleuderstreuer zwei als Schleuderscheibe mit Wurfschaufeln ausgebildete rotierende Wurfelemente aufweist, wobei die Wurfschaufeln winkelverstellbar auf den Schleuderscheiben und in verschiedenen Positionen festsetzbar angeordnet sind, **dadurch gekennzeichnet,** daß zum Erzielen einer dem Fahrgassenabstand entsprechenden Arbeitsbreite mit einer geringeren Drehzahl für die Schleuderscheiben wie zum Erzielen einer dem Doppelten oder dem Mehrfaches des Fahrgassenabstandes entsprechenden Abstand gearbeitet wird, und daß die Wurfschaufeln (11, 111, 112, 122, 123, 203, 222) jeweils mit festgelegten Winkeln zur Variation der gewünschten Arbeitsbreite innerhalb des durch die Drehzahl vorgegebenen möglichen Arbeitsbreitenbereiches eingestellt werden.

## Claims

1. Method of spreading and distributing agricultural fertilisers by means of centrifugal broadcasters having rotatably driven throwing means, which are provided with interchangeable and/or variable throwing vanes and by means of which the fertiliser particles are centrifuged over predeterminable scattering and working widths, the scattering and working width being determined by the spacings between the tramlines formed during the sowing of the plants situated in the area to be covered, fertiliser being distributed in the same field either over the scattering and working widths, which correspond to the tramline spacings, or over twice, or a whole multiple of, the tramline spacings, by the use of various, interchangeable throwing vanes, and the uniform distribution of fertiliser being ensured by the adjustment of the throwing vanes (11, 111, 112, 122, 123, 203, 222) or by the adjustment of the delivery point for the fertiliser onto the throwing means (10, 110, 121, 201, 221).

2. Method according to claim 1, characterised in that each tramline is travelled for one sort or type of fertiliser when the fertiliser is distributed over the width corresponding to the tramline spacing, and in that only every second or third tramline is travelled for the other sort or type of fertiliser when the fertiliser is distributed in the same field over twice, or a multiple of, the tramline spacing of a corresponding working and scattering width.

3. Method according to claim 1 or 2, characterised in that fine-grained and/or high-percentage nitrogen fertilisers are distributed over the scattering and working width corresponding to the tramline spacings, and in that other fertilisers are distributed over the multiple width, but preferably twice the width, of the tramline spacings.

4. Method according to claim 1, characterised in that throwing vanes (11, 111, 112, 122, 123, 203, 222) of variable lengths are used to achieve the various working widths.

5. Method according to claim 1, wherein the centrifugal broadcaster includes two rotatable throwing means, which means is configured as a centrifugal disc provided with throwing vanes, the throwing vanes being disposed so as to be angularly adjustable on the centrifugal discs and so as to be securable in various positions, characterised in that, in order to achieve a working width corresponding to the tramline spacing, the operation is carried out at a lower speed for the centrifugal discs than for achieving a spacing which corresponds to twice, or the multiple of, the tramline spacing, and in that the throwing vanes (11, 111, 112, 122, 123, 203, 222) are each adjusted to fixed angles to vary the desired working width within the possible range of working widths prescribed by the speed.

## Revendications

1. Procédé d'épandage et de distribution d'engrais dans le domaine agricole, à l'aide d'épandeurs centrifuges comportant des palettes d'éjection équipées d'éléments d'éjection, ces palettes entraînées en rotation pouvant être échangées et/ou modifiées, les particules d'engrais étant éjectées sur des largeurs d'épandage et de travail prédéterminées, ces largeurs d'épandage et de travail étant déterminées par l'écartement des voies de passage réalisées lors des semis des plantes occupant la surface d'épandage, l'engrais étant distribué en utilisant différentes palettes d'éjection échangeables, pour un épandage correspondant soit à des largeurs d'épandage et de travail correspondant à celle de l'écartement des voies de passage, soit au double ou à un multiple entier de l'écartement des voies de passage, sur le même champ, et la distribution régulière d'engrais étant assurée par le réglage des palettes d'éjection (11, 111, 112, 122, 123, 203, 222) ou par le réglage du point d'impact de l'engrais sur les éléments d'éjection (10, 110, 121, 201, 221).

2. Procédé selon la revendication 1,
caractérisé en ce que
pour l'une des sortes d'engrais ou l'un des types d'engrais, on utilise chaque voie de passage pour distribuer l'engrais sur une largeur correspondant à l'écartement des voies de passage, et en ce que pour une autre sorte d'engrais ou un autre type d'engrais, on n'utilise que chaque seconde ou troisième voie de passage pour distribuer l'engrais sur une largeur de travail et d'épandage correspondant au double ou à un multiple de l'écartement des voies de passage.

3. Procédé selon la revendication 1 ou 2,
caractérisé en ce qu'
- on distribue sur des largeurs d'épandage et de travail correspondantes, de l'engrais azoté en grains fins et/ou à fort pourcentage, cette largeur de travail ou d'épandage correspondant à l'écartement des voies de passage, et
- on distribue d'autres engrais sur des largeurs multiples et de préférence doubles de celle correspondant à l'écartement des voies de passage.

4. Procédé selon la revendication 1,
caractérisé en ce qu'
on utilise des palettes d'éjection (11, 111, 112, 122, 123, 203, 222) de longueurs différentes pour réaliser des largeurs de travail différentes.

5. Procédé selon la revendication 1 dans lequel l'épandeur centrifuge comporte deux moyens d'éjection rotatifs formés par des disques d'épandage équipés de palettes d'éjection, les palettes d'éjection étant montées de manière réglable angulairement sur les disques d'épandage et pouvant se bloquer dans différentes positions,
caractérisé en ce que
pour réaliser une largeur de travail correspondant à l'écartement des voies de passage, on utilise, pour les disques d'épandage, une vitesse de rotation plus faible que pour réaliser une largeur d'épandage correspondant au double ou à un multiple de l'écartement des voies de passage, et les palettes d'éjection (11, 111, 112, 122, 123, 203, 222) sont réglées avec des angles fixes pour modifier la largeur de travail souhaitée à l'intérieur de la plage des largeurs de travail permises, par la vitesse de rotation prédéterminée.
